# EUROPÄISCHE PATENTSCHRIFT

(11) **EP 3 831 643 B1**
(45) Veröffentlichungstag und Bekanntmachung des Hinweises auf die Patenterteilung: **30.08.2023**
(21) Anmeldenummer: 20208853.0
(22) Anmeldetag: 20.11.2020
(51) Int. Cl.: B60L 53/16, B60L 53/31, B62H 3/04, B62J 45/00, B62K 3/00

(54) **ELEKTROROLLER-LADESTATION**
ELECTRIC ROLLER CHARGING STATION
STATION DE RECHARGE DE SCOOTER ÉLECTRIQUE

(30) Priorität: 04.12.2019 DE 102019133041
(43) Veröffentlichungstag der Anmeldung: 09.06.2021
(73) Patentinhaber: Westnetz GmbH, 44139 Dortmund (DE)
(72) Erfinder: Göbeler, Miriam, 44263 Dortmund (DE); Kammering, Hanna, 44143 Dortmund (DE); Puhe, Frederik, 48727 Billerbeck (DE); Senner, Till, 45897 Gelsenkirchen (DE); Sturm, Michaela, 58706 Menden (DE)
(74) Vertreter: Cohausz & Florack

(56) Entgegenhaltungen:
- EP-A1- 3 005 507
- WO-A1-2010/114455
- DE-U1-202011 100 062
- IT-A1-201700 120 246
- JP-A- 2006 001 480
- US-A1- 2016 311 334

## Beschreibung

Die Erfindung betrifft eine Elektroroller-Ladestation zum elektrischen Laden von Elektrorollern. Darüber hinaus betrifft die Erfindung ein Elektroroller-Ladestationssystem und eine Verwendung einer Elektroroller-Ladestation.

Insbesondere in den Städten werden vermehrt elektrisch betriebene Roller, auch kurz Elektroroller bzw. E-Scooter genannt, zur Fortbewegung verwendet. Ein Elektroroller ist ein Fahrzeug, das einem Tretroller ähnelt. Ein Elektroroller verfügt über einen Elektromotor und einen wiederaufladbaren elektrischen Speicher, beispielsweise in Form eines Lithium-Ionen-Akkumulators, um den Elektromotor mit Energie zu versorgen.

Eine Vielzahl der beispielsweise in einer Stadt genutzten Elektroroller sind so genannte Verleih-Elektroroller, die von einem Anbieter für Nutzer bereitgestellt werden. Ein Nutzer kann beispielsweise einen Elektroroller für eine bestimmte Zeitdauer und einer bestimmten Leihgebühr nutzen. Häufig kann der Nutzer den Elektroroller an einer beliebigen Position in der Stadt nach einer Nutzung abstellen. Dies führt immer wieder dazu, dass abgestellte Elektroroller Wege, Zufahrten, Eingänge etc. versperren.

Um einen Elektroroller zu betreiben, ist es hierbei erforderlich, den Elektroroller bzw. dessen Energiespeicher regelmäßig (in der Regel mindestens einmal am Tag) zu laden. Hierzu werden die Elektroroller, insbesondere in jeder Nacht, von dem Anbieter, insbesondere Mitarbeiter des Anbieters, eingesammelt und zum Laden an eine herkömmliche Haushaltssteckdose angeschlossen. Nach erfolgter Aufladung wird ein Elektroroller wieder in der Stadt verteilt.

Nachteilig an diesem regelmäßig durchzuführenden Vorgang sind der hohe Aufwand und die entsprechend hohen Kosten. Zudem werden die Elektroroller in der Regel mit Fahrzeugen eingesammelt, die einen Verbrennungsmotor aufweisen, so dass auch die Gesamtumweltbilanz der Elektroroller unbefriedigend ist.

Ferner sind aus den Druckschriften WO 2010/114455 A1, WO 2014/191644 A1, IT 2017 0012 0246 A1 und DE 20 2011 100062 U1 jeweils Ladestationen zum Laden von Autos bekannt. Aus den Druckschriften JP 2006 001480 A und US 2016/0311334 A1 sind Elektroroller-Ladestationen bekannt.

Daher liegt der Erfindung die Aufgabe zugrunde, die oben beschriebenen Nachteile zumindest zu reduzieren und insbesondere eine Infrastruktur bereitzustellen, die ein Laden von Elektrorollern mit weniger Aufwand und vorzugsweise einer besseren Umweltbilanz ermöglicht.

Die Aufgabe wird gemäß einem ersten Aspekt der Erfindung gelöst durch eine Elektroroller-Ladestation zum elektrischen Laden von Elektrorollern nach Anspruch 1. Die Elektroroller-Ladestation umfasst mindestens eine in einem Gehäuse der Elektroroller-Ladestation angeordnete Ladeeinrichtung, eingerichtet zum Bereitstellen von elektrischer Energie. Das Gehäuse weist mindestens einen Eingangsanschluss auf, eingerichtet zum Anschließen der Ladeeinrichtung an eine Energiequelle. Die Elektroroller-Ladestation umfasst mindestens einen an mindestens einem Ausgangsanschluss des Gehäuses gekoppelten stabförmigen Kabelkanal mit mindestens einer Kabelkanalwand. Der stabförmige Kabelkanal weist mindestens einen innerhalb der mindestens einen Kabelkanalwand verlaufenden und elektrisch mit dem Ausgangsanschluss des Gehäuses gekoppelten elektrischen Hauptleiter mit mindestens einem Abgriff auf. Die Elektroroller-Ladestation umfasst mindestens ein Lademodul. Der stabförmige Kabelkanal weist mindestens einen ersten Modulanschluss auf, eingerichtet zum (insbesondere elektrischen und mechanischen) Koppeln mit einem zweiten Modulanschluss des Lademoduls. Das Lademodul weist mindestens eine elektrische Ladeschnittstelle auf, eingerichtet zum Koppeln mit einer zweiten elektrischen Ladeschnittstelle eines Elektrorollers. In einem (insbesondere elektrischen und mechanischen) Koppelzustand zwischen dem ersten Modulanschluss und dem zweiten Modulanschluss ist eine elektrische Verbindung zwischen dem Abgriff und der elektrischen Ladeschnittstelle zumindest herstellbar. Der erste Modulanschluss und der zweite Modulanschluss sind als Steckverbindung ausgebildet. Bei einer hergestellten Steckverbindung liegt eine elektrische und mechanische Kopplung vor. Der erste Modulanschluss und/oder der zweite Modulanschluss umfassen mindestens einen Sperrmechanismus, eingerichtet zum Blockieren einer Entfernung des Lademoduls bei einer hergestellten Steckverbindung in einem Sperrzustand des Sperrmechanismus.

Indem, im Gegensatz zum Stand der Technik, erfindungsgemäß eine Elektroroller-Ladestation mit einer in einem Gehäuse integrierten Ladeeinrichtung, einem daran gekoppelten Kabelkanal und mindestens einem, vorzugsweise einer Mehrzahl von mit dem Kabelkanal bei Bedarf koppelbaren Lademodulen bereitgestellt wird, wird in einfacher Weise eine Ladeinfrastruktur bzw. -möglichkeit für Elektroroller bereitgestellt. Insbesondere kann eine derartige Elektroroller-Ladestation in einem öffentlichen Bereich aufgestellt und von den Nutzern der Elektroroller verwendet werden. Ein Einsammeln der Elektroroller kann entfallen (oder zumindest reduziert werden). Kosten können gespart und die Umweltbilanz beim Betreiben von Elektrorollern verbessert werden. Ferner kann hierdurch die Akzeptanz von Elektrorollern in der Bevölkerung gesteigert werden.

Eine erfindungsgemäße Elektroroller-Ladestation ist eingerichtet zum Laden von Elektrorollern, also insbesondere von elektrisch betriebenen Rollern, die ähnlich einem Tretroller gebildet sind. Ein Elektroroller weist als Antrieb einen Elektromotor auf und zur Versorgung des Elektromotors einen wiederaufladbaren Energiespeicher. Insbesondere ist eine Elektroroller-Ladestation nicht eingerichtet zum Laden eines Elektroautos. Insbesondere weist eine erfindungsgemäße Elektroroller-Ladestation keine Ladeschnittstelle auf, die mit einer Ladeschnittstelle eines Elektroautos (direkt) koppelbar ist.

Eine erfindungsgemäße Ladestation umfasst mindestens eine Ladeeinrichtung, die insbesondere in einem Gehäuse integriert ist. Das (Schutz-)Gehäuse dient insbesondere dem Schutz der Ladeeinrichtung vor einer Beschädigung. Die Ladeeinrichtung umfasst Ladetechnik, um insbesondere von einer angeschlossenen elektrischen Energiequelle erhaltene elektrische Leistung dem mindestens einen Ausgangsanschluss des Gehäuses bereitzustellen, insbesondere an diesen zu übertragen. Die Ladetechnik kann zudem eine elektrische Absicherung umfassen, wie Sicherungen und/oder Schutzschalter, so dass insbesondere ein ausreichender Personenschutz bereitgestellt werden kann.

Vorzugsweise kann nur eine einzelne Ladeeinrichtung vorgesehen sein, zumindest nur eine einzelne Ladeeinrichtung für einen einzelnen angeschlossenen Kabelkanal (auch wenn der Kabelkanal über eine Vielzahl an angeschlossenen Lademodulen mit jeweils mindestens einer Ladeschnittstelle verfügt).

Erfindungsgemäß ist mindestens ein stabförmiger, insbesondere ein sich in einer (horizontalen) Längsrichtung erstreckender Kabelkanal mit dem Gehäuse mechanisch gekoppelt. Insbesondere ist der stabförmige Kabelkanal (der aus zwei oder mehr Modulen gebildet sein kann) an dem Ausgangsanschluss des Gehäuses angeschlossen. Vorzugsweise kann eine Stirnfläche des Kabelkanals mit dem Gehäuse mechanisch (zumindest formschlüssig) gekoppelt sein. Vorzugsweise kann die mindestens eine Kabelkanalwand derart mit dem Gehäuse gekoppelt sein, dass die elektrischen Komponenten vollständig von dem Gehäuse und/oder der mindestens einen Kabelkanalwand abgedeckt sind.

In dem Kabelkanal kann mindestens ein elektrischer Hauptleiter (mit mindestens einem Phasenleiter) angeordnet sein, der elektrisch mit der Ladeeinrichtung über den Ausgangsanschluss und einem Kabelkanaleingangsanschluss des Kabelkanals verbunden ist. Wie bereits beschrieben wurde, kann diese elektrische Verbindung vollständig von dem Gehäuse und/oder der mindestens einen Kabelkanalwand abgedeckt sein.

Der mindestens eine elektrische Hauptleiter weist mindestens einen zu einem ersten Modulanschluss geführten Abgriff auf. Vorzugsweise kann der elektrische Hauptleiter eine Mehrzahl von Abgriffen für eine entsprechende Mehrzahl an ersten Modulanschlüssen aufweisen (an denen eine entsprechende Anzahl von Lademodulen gekoppelt werden kann).

Wie bereits beschrieben wurde, weist der Kabelkanal mindestens einen ersten Modulanschluss auf. Vorzugsweise kann eine Mehrzahl von Modulanschlüssen angebracht sein, um vorteilhafterweise eine entsprechende Mehrzahl von Lademodulen mit dem Kabelkanal zu koppeln. Insbesondere kann ein erster Modulanschluss mechanisch und elektrisch zu einem zweiten Modulanschluss eines Lademoduls korrespondieren. Insbesondere kann eine elektrische Verbindung (ggf. mit einem integrierten Schalter) zwischen dem Abgriff und einer Ladeschnittstelle des Lademoduls über die genannten Modulanschlüsse hergestellt werden.

Das Lademodul kann über ein Lademodulgehäuse verfügen. Die elektrische Verbindung zwischen dem Abgriff und einer Ladeschnittstelle des Lademoduls kann vollständig von dem Lademodulgehäuse und/oder der mindestens einen Kabelkanalwand abgedeckt sein.

Gemäß einer ersten bevorzugten Ausführungsform der erfindungsgemäßen Elektroroller-Ladestation kann der stabförmige Kabelkanal ein oberirdisch (also über einer Erdoberfläche) auf einem Untergrund anordnenbarer Kabelkanal sein. Der Untergrund kann beispielsweise eine Wegfläche, wie ein Gehweg, eine Straße, Parkfläche, Abstellfläche etc. sein. Der stabförmige Kabelkanal ist insbesondere derart ausgebildet, dass dieser ohne weitere (Bau-)Maßnahmen auf einem derartigen Untergrund angeordnet werden kann. Eine einfache Installierung, insbesondere ohne umfangreiche Erdarbeiten, insbesondere ohne Tiefbauarbeiten, einer erfindungsgemäßen Elektroroller-Ladestation kann erfolgen.

Alternativ oder (vorzugsweise) zusätzlich kann die mindestens eine Kabelkanalwand aus einem Metall gebildet sein, insbesondere aus Stahl. Die Nutzung von Metall, insbesondere Stahl, hat den Vorteil, dass die in dem Kabelkanal integrierten Komponenten ausreichend gut gegen Beschädigungen geschützt sind. Vandalismusschäden und der gleichen kann vorgebeugt werden. Vorzugsweise kann auch das Gehäuse und/oder das Lademodulgehäuse aus Metall gebildet sein, insbesondere Stahl. Es versteht sich, dass bei anderen Varianten der Erfindung auch andere Materialien eingesetzt werden können, wie beispielsweise Kunststoffmaterialien.

Gemäß einer weiteren Ausführungsform der erfindungsgemäßen Elektroroller-Ladestation kann die Ladeeinrichtung zumindest eines der Ladeelemente aus der Gruppe, umfassend elektrischer Zähler, mindestens ein Kommunikationsmodul und Netzteil, umfassen. Vorzugsweise können sämtliche der genannten Elemente vorgesehen sein. Zusätzlich kann mindestens eine Sicherheitseinrichtung vorgesehen sein, umfassend beispielsweise Sicherungen.

Der elektrische Zähler kann insbesondere die ausgetauschte elektrische Energie (oder einen anderen elektrischen Parameter), insbesondere die durch die Elektroroller-Ladestation abgegebene elektrische Energie, erfassen, insbesondere messen. Das mindestens eine Kommunikationsmodul, insbesondere ein Fern-Kommunikationsmodul, wie ein Mobilfunkmodul, kann eingerichtet sein, um eine Kommunikation zwischen der Elektroroller-Ladestation und einem entfernt angeordneten Backendsystem (beispielsweise gebildet durch einen oder mehrere (verteilt) angeordnete Server) zu ermöglichen. Beispielweise können Zustandsdaten, wie Zählerdaten, (augenblicklicher Status der Ladestation (z.B. es wird gerade geladen oder nicht), übertragen werden. Das Netzteil kann insbesondere eingerichtet sein, elektrische Energie mit bestimmten elektrischen Parameterwerten abzugeben.

Vorzugsweise kann beispielsweise eine Ausgansspannung von vorzugsweise 220 V bereitgestellt werden, insbesondere mit einer Frequenz von vorzugsweise 50 Hz. Es versteht sich, dass auch andere elektrische Parameter vorgeben sein können.

Gemäß einer weiteren Ausführungsform der erfindungsgemäßen Elektroroller-Ladestation kann der stabförmige Kabelkanal eine rechteckförmige Querschnittsfläche aufweisen. Die Höhe des Kabelkanals kann insbesondere zwischen 5 cm und 50 cm liegen, vorzugsweise zwischen 10 cm und 30 cm. Ein derartiger kompakter Kabelkanal kann sicher auf einem Untergrund angeordnet werden.

Darüber hinaus kann, gemäß einer weiteren Ausführungsform der Elektroroller-Ladestation, das Lademodul mindestens einen ansteuerbaren Schalter umfassen, eingerichtet zum Herstellen und Trennen der elektrischen Verbindung zwischen dem Abgriff und der elektrischen Ladeschnittstelle. Insbesondere kann der Schalter derart ansteuerbar sein, dass bei einem Erhalt einer ersten Steuerinformation die elektrische Verbindung hergestellt wird und/oder bei Erhalt einer weiteren Steuerinformation die elektrische Verbindung getrennt wird. Bei anderen Varianten der Erfindung kann ein Schalter auch entfallen und insbesondere eine elektrische Verbindung zwischen der Ladeschnittstelle und dem Abgriff stets hergestellt sein.

Gemäß einer besonders bevorzugten Ausführungsform der erfindungsgemäßen Elektroroller-Ladestation kann die mindestens eine Ladeschnittstelle ein fest an dem Lademodul angeschlagenes Ladekabel umfassen. Ein fest angeschlagenes Ladekabel kann einen Ladeanschluss (z.B. Ladestecker, wie ein Schuko-Stecker, oder vorzugsweise eine Ladesteckerbuchse, wie eine Schuko-Steckdose) aufweisen, um das Ladekabel mit einem zu dem Ladeanschluss der Ladestation korrespondierenden Ladeanschluss des Elektrorollers zu koppeln. Unter einem fest angeschlagenen Ladekabel ist insbesondere zu verstehen, dass ein Nutzer das Ladekabel nicht zerstörungsfrei von der Elektroroller-Ladestation trennen kann.

Das Ladekabel kann auf einer Kabeltrommel eines Kabelaufrollmechanismus herausziehbar gelagert sein. Insbesondere kann das Ladekabel manuell aus einer in dem Lademodulgehäuse vorgesehenen Öffnung durch einen Nutzer herausziehbar sein. In einem herausgezogenen Zustand kann beispielsweise vorgesehen sein, dass das Ladekabel für eine Ladevorgang verrastet ist. Nach der Durchführung des Ladevorgangs, insbesondere nach einer Entkopplung des Ladeanschlusses des Ladekabels von dem Ladeanschluss des Elektrorollers, kann das Ladekabel vorzugsweise automatisch (ggf. nach einer Nutzeraktion zur Aufhebung der Verrastung) wieder eingezogen werden. Insbesondere kann ein Federmechanismus hierfür vorgesehen sein. Bei einem Einziehvorgang wird das Ladekabel insbesondere auf die Kabeltrommel des Kabelaufrollmechanismus (automatisch) aufgewickelt. Alternativ oder zusätzlich kann der Ladeanschluss über einen Magnetanschluss erfolgen, um die Gefahr von Vandalismus weiter zu verringern und die Lebensdauer des Anschlusses zu erhöhen. Insbesondere kann zudem die Nutzerfreundlichkeit verbessert werden, indem der manuelle Verbindungsvorgang vereinfacht wird. Insbesondere kann durch die Magnetkraft eine automatische Ausrichtung der Anschlüsse unterstützt und insbesondere ein korrektes Verbinden erleichtert werden.

Der Ladeanschluss kann vorzugsweise bündig mit der Lademodulgehäusewand, welche die Öffnung umgibt, in einem aufgewickelten bzw. eingeschlossenen Zustand abschließen. Um ein Herausziehen zu erleichtern, kann ein Griff an dem Ladeanschluss oder eine Aussparung an der der Lademodulgehäusewand, welche die Öffnung umgibt, vorgesehen sein. Durch den Kabelaufrollmechanismus kann die Lebensdauer eines Ladekabels signifikant erhöht und die Nutzerfreundlichkeit gleichzeitig verbessert werden.

Gemäß einer weiteren bevorzugten Ausführungsform der Elektroroller-Ladestation kann das Lademodul mindestens eine Aufnahme aufweisen, eingerichtet zum zumindest teilweisen Aufnehmen eines Teils eines Elektrorollers, derart, dass in einem aufgenommenen Zustand der Elektroroller durch die Aufnahme in einem Parkzustand gehalten wird. Insbesondere kann zwischen der Aufnahme und dem Teil des Elektrorollers (z.B. das Vorderrad und/oder die Gabel des Vorderrads) eine Verklemmung erfolgen, so dass der Elektroroller in diesem Parkzustand automatisch gehalten werden kann. Vorzugsweise kann ein Nutzer den Elektroroller, wie ein Vorderrad oder ein anderes Teil des Elektrorollers, in die Aufnahme manuell bewegen. In einfacher Weise kann ein Elektroroller sicher in einer vorgegebenen Parkposition aufgestellt und insbesondere in dieser gehalten werden. Durch eine gegenteilige Bewegung eines Nutzers kann der Elektroroller für eine Nutzung des Elektrorollers herausgezogen werden. Anders ausgedrückt bildet die Aufnahme insbesondere eine Parkbox für einen Elektroroller.

Besonders bevorzugt kann die mindestens eine Ladeschnittstelle in diesem Fall einen ersten elektrischen Lademodulkontakt (der beispielsweise gefedert ausgebildet sein kann) und mindestens einen weiteren elektrischen Lademodulkontakt (der beispielsweise gefedert ausgebildet sein kann) umfassen. Der erste elektrische Lademodulkontakt kann eingerichtet sein zum elektrischen Kontaktieren mit einem ersten elektrischen Elektrorollerkontakt des Elektrorollers. Der weitere elektrische Lademodulkontakt kann eingerichtet sein zum elektrischen Kontaktieren mit einem weiteren Elektrorollerkontakt des Elektrorollers in dem Parkzustand. Ein Parkzustand liegt insbesondere dann vor, wenn der Elektroroller ausgeschaltet und insbesondere die Miete beendet ist. Auch kann in dem Parkzustand eine Aktivierung des Elektrorollers gesperrt sein, um zu verhindern, dass dieser mit verbundenem Kabel oder dergleichen losfährt.

Insbesondere können die Lademodulkontakte derart an der durch das Lademodul gebildeten Aufnahme angeordnet sein, dass in einem verklemmten Zustand eine elektrische Verbindung zwischen den Lademodulkontakten und den hierzu korrespondierenden Elektrorollerkontakten automatisch hergestellt wird. Insbesondere meint dies, dass durch die oben beschriebene manuelle Bewegung des Elektrorollers in die Aufnahme (beispielsweise gebildet durch zwei nahezu parallel verlaufende Schenkel eines Lademoduls) automatisch eine elektrische Verbindung zwischen Elektroroller und Elektroroller-Ladestation hergestellt wird. Der Elektroroller wird insbesondere automatisch geladen. Eine weitere manuelle Nutzeraktion kann entfallen. Die Nutzerfreundlichkeit kann verbessert werden. Gleichzeitig kann einer Beschädigung eines Elektrorollers vorgebeugt werden, da dieser in einer Parkposition sicher gehalten werden.

Alternativ oder zusätzlich kann die mindestens eine Ladeschnittstelle mindestens eine erste Spule aufweisen, eingerichtet zum induktiven Übertragen der elektrischen Energie an mindestens eine zweite Spule des Elektrorollers. Ein induktives Übertragen von elektrischer Energie während eines Ladevorgangs kann die Nutzerfreundlichkeit noch weiter verbessern.

Gemäß einer Ausführungsform der erfindungsgemäßen Elektroroller-Ladestation kann ein Lademodul über zwei oder mehr (unterschiedlich ausgebildete) Ladeschnittstellen (wie zuvor beschrieben wurde) verfügen, um insbesondere ein Laden von unterschiedlichen Elektrorollern mit unterschiedlichen Ladeschnittstellen zu ermöglichen.

Für eine einfache Montage und um insbesondere eine Möglichkeit bereitzustellen, eine Elektroroller-Ladestation in einfacher Weise (abhängig von dem Bedarf) zu erweitern (oder zu verkleinern), ist erfindungsgemäß der erste Modulanschluss und der zweite Modulanschluss als Steckverbindung ausgebildet, wobei bei einer hergestellten Steckverbindung eine elektrische und mechanische (zumindest formschlüssige) Kopplung vorliegt. Eine Steckverbindung kann in einfacher Weise hergestellt und wieder demontiert werden.

In entsprechender Weise kann zudem vorgesehen sein, dass zwei Kabelkanalmodule miteinander koppelbar sind. Beispielsweise kann ein erstes Kabelkanalmodul über eine Steckverbindung elektrisch und mechanisch mit einem zweiten Kabelkanalmodul gekoppelt werden, um insbesondere den Kabelkanal zu bilden. In einfacher Weise kann eine Montage und insbesondere Erweiterung einer Elektroroller-Ladestation erfolgen.

Um ein Demontieren eines Lademoduls durch einen unberechtigten Nutzer zu verhindern oder zumindest zu erschweren, umfassen der erste Modulanschluss und/oder der zweite Modulanschluss mindestens einen Sperrmechanismus, eingerichtet zum Blockieren einer Entfernung des Lademoduls bei einer hergestellten Steckverbindung in einem Sperrzustand des Sperrmechanismus. Der Sperrmechanismus kann beispielsweise ein nur mit einem Spezialwerkzeug betätigbarer Mechanismus sein. Nach einer erfolgten Kopplung kann durch eine Betätigung ein Sperrzustand, insbesondere eine Verriegelung, hergestellt werden (und durch das Spezialwerkzeug bei Bedarf wieder gelöst werden).

Ein entsprechender Mechanismus kann zwischen Gehäuse und Kabelkanal und/oder zwischen zwei Kabelkanalmodulen vorgesehen sein.

Ein weiterer Aspekt der Erfindung ist ein Elektroroller-Ladestationssystem. Das Elektroroller-Ladestationssystem umfasst mindestens eine zuvor beschriebene Elektroroller-Ladestation und mindestens eine zumindest teilweise oberirdisch angeordnete Kabelanschlussstation.

Besonders bevorzugt kann der Eingangsanschluss unmittelbar mit einem hierzu korrespondierenden Anschluss der Kabelanschlussstation gekoppelt sein. Bei anderen Varianten kann auch eine elektrische Leitung, z.B. von 1 m bis 20 m Länge, zwischen den genannten Anschlüssen angeordnet sein.

Gemäß einer besonders bevorzugten Ausführungsform des erfindungsgemäßen Elektroroller-Ladestationssystem kann die Kabelanschlussstation eine Ortsnetzstation oder ein Kabelverteilschrank sein. Dies ermöglicht eine besonders einfache Kopplung und insbesondere Montage der Elektroroller-Ladestation mit einer Energiequelle. Bei anderen Varianten der Erfindung kann die Kabelanschlussstation auch eine Straßenbeleuchtungsvorrichtung sein.

Vorzugsweise kann die Kabelanschlussstation insbesondere eine Vorrichtung sein, bei der ohnehin eine elektrische Verbindung von einem Versorgungsnetz (z.B. öffentliches Niederspannungsnetz und/oder Mittelspannungsnetz) an die Oberfläche vorgesehen ist. Dies erleichtert die Montage einer Elektroroller-Ladestation erheblich.

Ein noch weiterer Aspekt der Erfindung ist eine Verwendung einer zuvor beschriebenen Elektroroller-Ladestation zum Laden mindestens eines Elektrorollers, insbesondere an einer zumindest teilweise oberirdisch angeordneten (zuvor beschriebenen) Kabelanschlussstation.

Insbesondere wird erfindungsgemäß ein Park- und Ladesystem (auch Park-and-Charge-System genannt) bereitgestellt, welches insbesondere direkt an die im Stadtgebiet verteilten Ortsnetzstationen, Kabelverteilerschränke und Straßenbeleuchtungsvorrichtungen (z.B. Smartpoles) angeschlossen werden kann. Insbesondere kann eine Montage ohne einen für die Kabelverlegung notwendigen und aufwendigen Tiefbau direkt an ein Versorgungsnetz angebunden werden. Vorzugsweise können mehrere E-Scooter gleichzeitig geladen werden. Dadurch werden die Roller nicht nur regelmäßig aufgeladen, sondern gleichzeitig von störenden Parkplätzen auf den Gehwegen und dergleichen entfernt. Die erfindungsgemäße Lösung ist insbesondere in allen Städten mit E-Scooter-Betrieb einsetzbar.

Es sei angemerkt, dass die Begriffe erste, zweite etc. nicht dazu dienen, eine Reihenfolge anzugeben, sondern nur dazu dienen, zwei Vorrichtungen voneinander zu unterscheiden.

Die Merkmale der Elektroroller-Ladestationen, Elektroroller-Ladestationssysteme und Verwendungen sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, die erfindungsgemäße Elektroroller-Ladestation, das erfindungsgemäße Elektroroller-Ladestationssystem und die erfindungsgemäße Verwendung auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Draufsicht eines Ausführungsbeispiels einer Elektroroller-Ladestation gemäß der vorliegenden Erfindung,
- Fig. 2: eine schematische Ansicht eines Ausführungsbeispiels eines Elektroroller-Ladestationssystems gemäß der vorliegenden Erfindung,
- Fig. 3: eine schematische Teilansicht eines Ausführungsbeispiels einer Elektroroller-Ladestation gemäß der vorliegenden Erfindung, und
- Fig. 4: eine schematische Teilansicht eines weiteren Ausführungsbeispiels einer Elektroroller-Ladestation gemäß der vorliegenden Erfindung.

Nachfolgend werden für gleiche Elemente gleiche Bezugszeichen verwendet.

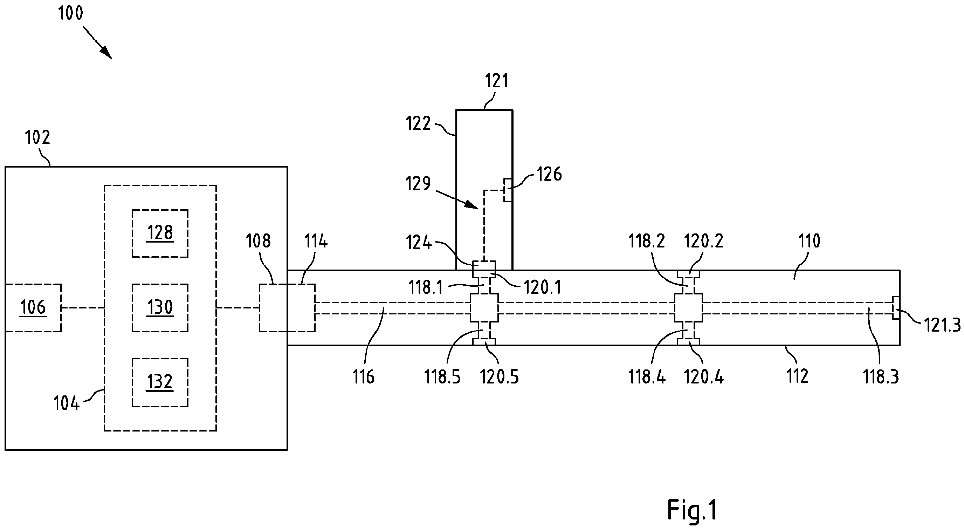

Die Figur 1 zeigt eine schematische Draufsicht eines Ausführungsbeispiels einer Elektroroller-Ladestation 100 gemäß der vorliegenden Erfindung.

Die Elektroroller-Ladestation 100 umfasst ein (Schutz-)Gehäuse 102, vorzugsweise ein aus Metall (z.B. Stahl) gebildetes Gehäuse 102. In dem Gehäuse 102 ist vorliegend (genau) eine Ladeeinrichtung 104 mit mindestens einem Zähler 128, mindestens einem Kommunikationsmodul 130 und mindestens einem Netzteil 132 integriert.

Auch kann eine (nicht gezeigte) Sicherheitseinrichtung mit mindestens einer Sicherung oder dergleichen integriert sein. Der elektrische Zähler 128 ist zumindest eingerichtet, die durch die Elektroroller-Ladestation 100 abgegebene elektrische Energie zu messen.

Die gemessene elektrische Energie kann beispielsweise durch das Kommunikationsmodul 130 (insbesondere ein Fern-Kommunikationsmodul, wie ein Mobilfunkmodul), an ein (nicht dargestelltes) Backendsystem übertragen werden. Das Netzteil 132 kann eingerichtet sein, eine von einer (nicht gezeigten) Energiequelle über den Eingangsanschluss 106 bereitgestellte elektrische Energie mit bestimmten elektrischen Parametern (z.B. bestimmte Ausgangsspannung, bestimmte Frequenz und/oder bestimmter Strom) an den Ausgangsanschluss 108 zu liefern. Es versteht sich, dass die Ladeeinrichtung weitere (oder weniger) Komponenten umfassen kann.

Wie zu erkennen ist, schließt unmittelbar an das Gehäuse 102 ein stabförmiger Kabelkanal 110 an, dessen mindestens eine (umlaufende) Kabelkanalwand 112 vorzugsweise aus Metall (z.B. Stahl) gebildet ist. Der stabförmige Kabelkanal 110 weist an dem mit dem Gehäuse 102 mechanisch gekoppelten (insbesondere ist zumindest eine formschlüssige Kopplung vorgesehen) stirnseitigen Ende einen Kabelkanalanschluss 114 auf, der zu dem Ausgangsanschluss 108 (elektrisch und mechanisch) korrespondiert. Insbesondere kann der Kabelkanal 110 zumindest formschlüssig mit dem Gehäuse 102 verbunden sein.

Mit dem Kabelkanalanschluss 114 ist ein elektrischer Hauptleiter 116 (z.B. gebildet aus einem Phasenleiter oder drei Phasenleiter(n)) elektrisch verbunden. Vorliegend ist an dem elektrischen Hauptleiter 116 eine Mehrzahl von Abgriffen 118.1 bis 118.5 angeordnet, die jeweils zu einem ersten Modulanschluss 120.1 bis 120.5 führen. Bei anderen Varianten kann auch nur ein Abgriff vorgesehen sein. Ggf. kann eine Kommunikationsschnittstelle verlegt sein.

Beispielhaft ist an einem ersten Modulanschluss 120.1 ein Lademodul 122 gekoppelt, insbesondere ein zweiter Modulanschluss 124 des Lademoduls 122. Insbesondere korrespondiert der erste Modulanschluss 120.1 elektrisch und mechanisch zu dem zweiten Modulanschluss 124 des Lademoduls 122. Beispielsweise können der erste Modulanschluss 120.1 und der zweite Modulanschluss 124 als Steckverbindung ausgebildet sein. Dies erlaubt eine einfache Montage eines Lademoduls 122 durch einen Monteur.

Nach Herstellung der Steckverbindung kann vorzugsweise durch ein Betätigen eines (nicht gezeigten) Sperrmechanismus eine unerlaubte Lösung des Lademoduls 122 blockiert werden. Insbesondere kann durch eine Betätigung (beispielsweise mit einem Spezialwerkzeug) der Sperrmechanismus eine Verriegelung zwischen dem Lademodul 122 und dem Kabelkanal 110 bewirken.

Das Lademodul 122 weist mindestens eine Ladeschnittstelle 126 auf. Bei anderen Varianten kann ein Lademodul auch mehrere (ggf. unterschiedlich gebildete) Ladeschnittstellen aufweisen.

In dem (gezeigten) Koppelzustand zwischen dem ersten Modulanschluss 120.1 und dem zweiten Modulanschluss 124 ist eine elektrische Verbindung 129 zwischen dem Abgriff 118.1 und der elektrischen Ladeschnittstelle 126 (dauerhaft) hergestellt. Bei anderen Varianten kann die Verbindung einen ansteuerbaren Schalter umfassen.

Ein zu ladender Elektroroller kann mit der Ladeschnittstelle 126 zumindest elektrisch gekoppelt werden, um eine elektrische Leistungsübertragung von der Ladeschnittstelle 126 an den Elektroroller (insbesondere dessen Energiespeicher) zu ermöglichen.

Das dargestellte Lademodul 122 weist insbesondere ein Lademodulgehäuse 121 auf, welches vorzugsweise aus Metall (z.B. Stahl) gebildet ist.

Insbesondere kann eine Elektroroller-Ladestation 100 mit einer kompakten Stahlkonstruktion bereitgestellt werden, in der das mindestens eine Ladekabel für die zu ladenden Elektroroller liegen kann. Durch die modulartige Ausbildung der Elektroroller-Ladestation 100 kann diese in einfacher Weise erweitert oder verkleinert werden.

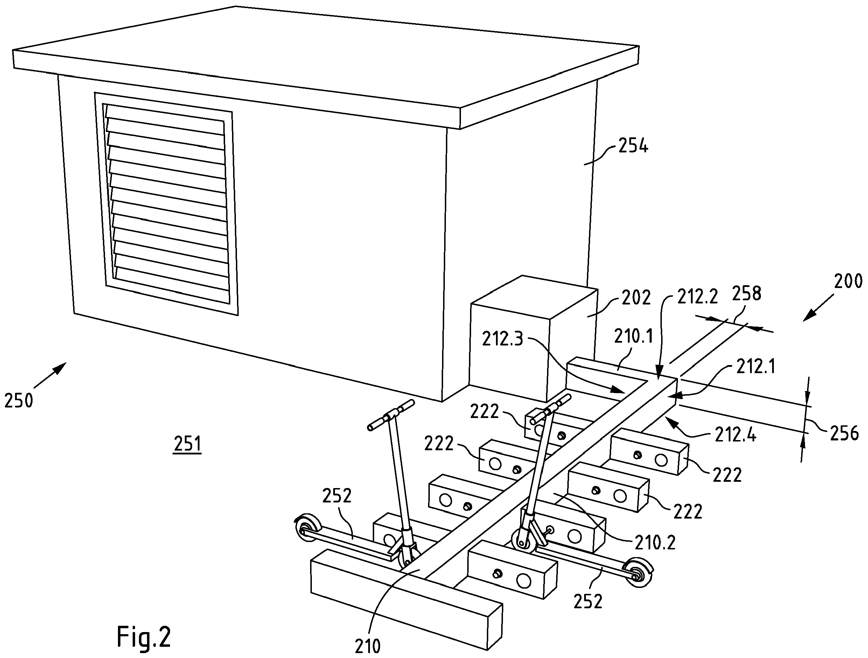

Die Figur 2 zeigt eine schematische Ansicht eines Ausführungsbeispiels eines Elektroroller-Ladestationssystems 250 gemäß der vorliegenden Erfindung mit einem Ausführungsbeispiel einer Elektroroller-Ladestation 200 gemäß der vorliegenden Erfindung zum Laden von Elektrorollern 552.

Zu Gunsten einer besseren Übersicht wurde in der Figur 2 auf die Darstellung einiger Details der Elektroroller-Ladestation 200 verzichtet. Insbesondere kann die Elektroroller-Ladestation 200 im Wesentlichen gemäß der Elektroroller-Ladestation 100 nach Figur 1 gebildet sein, so dass zur Vermeidung von Wiederholungen und hinsichtlich der genannten Details insbesondere auf die Ausführungen zur Figur 1 verwiesen wird.

Das dargestellte Elektroroller-Ladestationssystem 250 umfasst mindestens eine Elektroroller-Ladestation 200 und eine Kabelanschlussstation 254, vorliegend in Form einer Ortsnetzstation 254. Eine Ortsnetzstation 254 kann insbesondere einen Transformator umfassen, um beispielsweise ein Mittelspannungsnetz mit einem Niederspannungsnetz zu koppeln. Es versteht sich, dass bei anderen Varianten der Erfindung eine Kabelanschlussstation auch ein Kabelverteilschrank oder eine Straßenbeleuchtungsvorrichtung sein kann.

Zusätzlich kann ein Elektroroller-Ladestationssystem 250 ein Backendsystem umfassen.

Wie zu erkennen ist, ist das Gehäuse 202 unmittelbar an der Ortsnetzstation 254 angeschlossen. Das Gehäuse 202 der Elektroroller-Ladestation 200 kann zumindest formschlüssig an dem Gehäuse der Ortnetzstation 254 befestigt sein. Die Ortnetzstation 254 dient insbesondere als (ohnehin) vorgesehene (oberirdische) Energiequelle. Insbesondere kann der Eingangsanschluss des Gehäuses 202 elektrisch mit einem hierzu korrespondierenden Anschluss der Ortsnetzstation 254 verbunden sein. Bei anderen Varianten der Erfindung kann das Gehäuse, insbesondere wenn kein ausreichender Platz an der Ortnetzstation für eine unmittelbare Anordnung des Gehäuses 202 vorhanden ist, auch entfernt (z.B. zwischen 1 und 20 m) angeordnet sein.

An das Gehäuse 202 schließt sich (unmittelbar) vorliegend ein aus zwei Kabelkanalmodulen 210.1, 210.2 gebildeter Kabelkanal 210 an. Insbesondere kann durch eine Verwendung einer Mehrzahl von Kabelkanalmodulen eine gewünschte geometrische Form der Elektroroller-Ladestation 200 in einfacher Weise hergestellt werden, um insbesondere den Platz um eine Kabelanschlussstation 254 optimal als Park-und-Ladesystem 250 zu nutzen.

Der stabförmige Kabelkanal 210 ist ein oberirdisch auf einem Untergrund 251 anordnenbarer Kabelkanal 210. Dies meint insbesondere, dass der Kabelkanal 210 in einem montierten Zustand der Elektroroller-Ladestation 200 auf einem benachbart zu der Kabelanschlussstation 254 vorhandenen Untergrund 251 angeordnet ist, wie ein Gehweg, eine Straße, ein Parkplatz etc.

Der dargestellte stabförmige Kabelkanal 210 kann eine rechteckförmige Querschnittsfläche aufweisen. Insbesondere kann die Höhe 256 des Kabelkanals 210 (in dem montierten Zustand der Elektroroller-Ladestation 200) zwischen 5 cm und 50 cm liegen, vorzugsweise zwischen 10 cm und 30 cm. Die Höhe eines Lademodulgehäuses eines Lademoduls 222 kann (in dem montierten Zustand der Elektroroller-Ladestation 200) vorzugsweise gleich der Höhe 256 des Kabelkanals 210 oder geringer sein. Die Breite 258 des Kabelkanals 210 (in dem montierten Zustand der Elektroroller-Ladestation 200) kann zwischen 5 cm und 50 cm liegen, vorzugsweise zwischen 10 cm und 30 cm.

Wie ferner aus der Figur 2 zu erkennen ist, kann ein Kabelkanal 210 eine obere Kabelkanalwand 212.2, eine untere Kabelkanalwand 212.4 (welche den Untergrund kontaktiert) und zwei seitliche Kabelkanalwände 212.1, 212.3 umfassen, welche vorzugsweise aus Metall gebildet sein können.

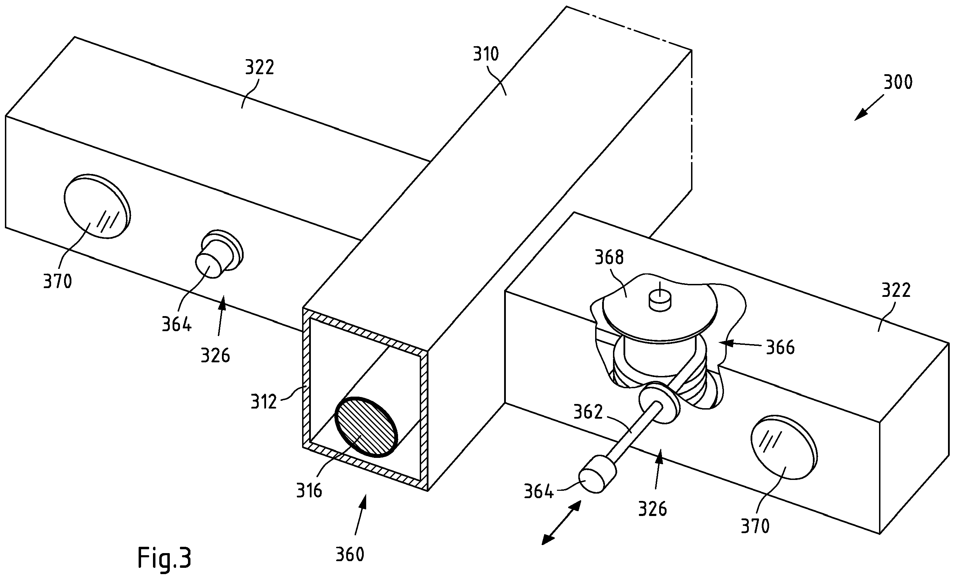

Die Figur 3 zeigt eine schematische Teilansicht eines Ausführungsbeispiels einer Elektroroller-Ladestation 300 gemäß der vorliegenden Erfindung. Zur Vermeidung von Wiederholungen werden nachfolgend im Wesentlichen nur die Unterschiede zu den vorherigen Ausführungsbeispielen erläutert und ansonsten auf die Ausführungen zu den Figuren 1 und 2 verwiesen.

In dem dargestellten Beispiel sind an dem Kabelkanal 310 zwei Lademodule 322 gekoppelt. Vorliegend sind die Lademodule 322 identisch gebildet. Es versteht sich, dass bei anderen Varianten der Erfindung auch unterschiedlich gebildete Lademodule, beispielsweise mit unterschiedlichen Ladeschnittstellen, vorgesehen sein können, um insbesondere unterschiedlichen Elektrorollern ein Laden zu ermöglichen.

Ein Lademodul 322 weist eine elektrische Ladeschnittstelle 326 auf. Die Ladeschnittstelle 326 umfasst vorliegend ein fest an dem Lademodul 322 angeschlagenes Ladekabel 362, insbesondere mit einem Ladeanschluss 364, vorzugsweise eine Ladesteckdose 364 (oder einen Ladestecker). Das Ladekabel 362 ist insbesondere auf einer Kabeltrommel 368 eines Kabelaufrollmechanismus 366 herausziehbar gelagert. Bei anderen Varianten kann auch eine fest Verankerung und/oder ein Magnetanschluss bzw. -mechanismus vorgesehen sein.

Insbesondere kann das Ladekabel 362 manuell aus einer in dem Lademodulgehäuse vorgesehenen (Kabel-)Öffnung durch einen Nutzer herausziehbar sein. In einem herausgezogenen Zustand kann beispielsweise vorgesehen sein, dass das Ladekabel 362 für eine Ladevorgang durch einen (nicht dargestellten) Verrast- bzw. Feststellmechanismus verrastet ist, so dass insbesondere (ohne eine weitere Nutzeraktion) keine weitere Bewegung des Ladekabels 362 in dem verrasteten Zustand erfolgen kann.

Nach der Durchführung des Ladevorgangs, insbesondere nach einer Entkopplung des Ladeanschlusses 364 des Ladekabels 362 von einem Ladeanschluss eines Elektrorollers, kann das Ladekabel 362 vorzugsweise automatisch (ggf. nach einer Nutzeraktion zur Aufhebung der Verrastung) wieder durch den Kabelaufrollmechanismus 366 eingezogen werden. Insbesondere kann ein Federmechanismus hierfür vorgesehen sein. Bei einem Einziehvorgang wird das Ladekabel 362 insbesondere auf die Kabeltrommel 364 des Kabelaufrollmechanismus 366 aufgewickelt.

Optional kann jedes Lademodul 322 über ein optisches Anzeigeelement 370 verfügen. Ein Anzeigenelement kann eingerichtet sein den augenblicklichen Zustand (z.B. belegt, nicht belegt, defekt, Ladevorgang beendet etc.) des jeweiligen Lademoduls 322 anzuzeigen.

Es versteht sich, dass auch die Varianten nach Figur 1, 2 oder 4 über ein optisches Anzeigeelement 370 verfügen können. Das optische Anzeigenelement 370 kann beispielsweise abhängig von dem Belegungszustand des Lademoduls 322 bzw. des hierzu korrespondierenden Ladeplatzes unterschiedliche Farben oder dergleichen anzeigen. Beispielsweise kann bei einem angeschlossenen Elektroroller (und eines augenblicklichen Ladens des Elektrorollers) rotes Licht angezeigt werden, in einem unbelegten Zustand grünes Licht und/oder in einem belegten Zustand und abgeschlossenem Ladevorgang ein blaues Licht angezeigt werden. Es versteht sich, dass andere Farben und/oder andere optische Mittel (z.B. Blinken) verwendet werden können.

Darüber hinaus ist zu erkennen, dass der stabförmige Kabelkanal 310 einen rechteckförmigen Querschnitt 360 mit einem in dem Kabelkanal 310 integrierten elektrischen Hauptleiter 316 aufweist.

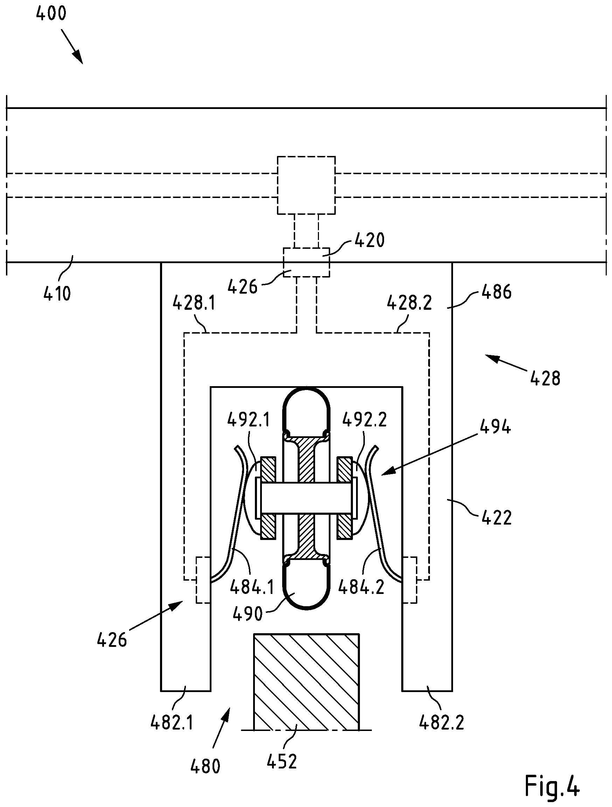

Die Figur 4 zeigt eine schematische Teilansicht (insbesondere Draufsicht) eines weiteren Ausführungsbeispiels einer Elektroroller-Ladestation 400 gemäß der vorliegenden Erfindung. Zur Vermeidung von Wiederholungen werden nachfolgend im Wesentlichen nur die Unterschiede zu den vorherigen Ausführungsbeispielen erläutert und ansonsten auf die Ausführungen zu den Figuren 1, 2 und/oder 3 verwiesen.

Dargestellt ist insbesondere ein Lademodul 422, welches in zuvor beschriebener Weise mit einem stabförmigen Kabelkanal 410 gekoppelt ist. Das Lademodul 422 weist vorliegend einen Grundkörper 486 auf, der zwei Schenkel 482.1, 482.2 des Lademoduls 422 miteinander verbindet. Insbesondere weist das Lademodul 422 eine im Wesentlichen U-förmige Form (denkbare wäre beispielsweise auch eine V- oder W-Form) auf.

Das Lademodul 422 weist vorliegend mindestens eine Aufnahme 480 auf, eingerichtet zum zumindest teilweisen Aufnehmen eines Teils 490 eines Elektrorollers 452, derart, dass in einem aufgenommenen Zustand der Elektroroller 452 durch die Aufnahme 480 in einem Parkzustand (stehend) gehalten wird.

Die Aufnahme 480 wird vorliegend insbesondere durch die geometrische Ausgestaltung des Lademoduls 422 gebildet. Insbesondere sind die Schenkel 482.1, 482.2 derart zueinander angepasst, insbesondere in einer bestimmten geometrischen Anordnung, dass sie eine zu einem Teil 490 (insbesondere dem (Vorder-)Rad 490) eines Elektrorollers korrespondieren. So kann der Abstand zwischen den Schenkeln 482.1, 482.2 zu der Dicke des Teils 490 korrespondieren. Insbesondere können die Schenkel 482.1, 482.2 das Teil 490 (insbesondere dem (Vorder-)Rad 490) des Elektrorollers 452 verklemmen, so dass der Elektroroller 452 in diesem Parkzustand gehalten wird.

Darüber hinaus kann die Ladeschnittstelle 426 vorliegend einen ersten elektrischen Lademodulkontakt 484.1 und mindestens einen weiteren elektrischen Lademodulkontakt 484.2 umfassen (beispielsweise können die Kontakte 484.1, 484.2 mit unterschiedlichen elektrischen Potentialen beaufschlagt sein (z.B. Erde und X Volt, -X Volt und X Volt, wobei X für einen bestimmten Potentialwert steht)).

Wie ferner aus der Figur 4 zu erkennen ist, kann der erste elektrische Lademodulkontakt 484.1 eingerichtet sein zum elektrischen Kontaktieren mit einem ersten elektrischen Elektrorollerkontakt 492.1 des Elektrorollers 452 in dem dargestellten Parkzustand. Der weitere elektrische Lademodulkontakt 484.2 kann eingerichtet sein zum elektrischen Kontaktieren mit einem weiteren Elektrorollerkontakt 492.2 des Elektrorollers 452 in dem Parkzustand. Insbesondere umfasst die Ladeschnittstelle 494 des Elektrorollers 452 die Elektrorollerkontakte 492.1. 492.2, die beispielsweise an einer Gabel des Elektrorollers 452 angeordnet und mit einem Energiespeicher des Elektrorollers 452 verbunden sein können.

Insbesondere kann bei der dargestellten Ausführungsform ein Nutzer nach einer Nutzung des Elektrorollers 452 diesen zum Parken mit dem Vorderrad 490 zwischen die genannten Schenkel 482.1, 482.2 manuell stellen. Die Aufnahme 480 kann so gebildet sein, dass nur bei einem korrekt zwischen den Schenkeln platzierten Vorderrad 490 des Elektrorollers 452 der Elektroroller 452 in dem Parkzustand gehalten wird. Anders ausgedrückt würde der Elektroroller 452 bei einer nicht korrekten Platzierung durch einen Nutzer umkippen. Insbesondere bildet die Aufnahme 480 eine Parkbox 480 für einen Elektroroller 452.

Ferner ist vorliegend eine korrekte Platzierung des Vorderrads 490 gleichbedeutend damit, dass ein elektrischer Kontakt zwischen den jeweiligen (leitend gebildeten) Kontakten 484, 492 hergestellt ist. Für einen besonders guten elektrischen Kontakt können die Lademodulkontakte 484.1, 484.2 als Federkontakte 484.1, 484.2 gebildet sein. Nach Herstellung des elektrischen Kontakts kann der Ladevorgang automatisch (ohne weitere Nutzeraktionen) gestartet werden. Bei anderen Varianten kann vorgesehen sein, dass eine Nutzeraktion an einer Nutzerschnittstelle (beispielsweise gebildet durch ein mobiles Nutzerendgerät und/oder ein an der Ladenstation angebrachten Terminal) durchgeführt werden muss, um einen Ladevorgang zu initiieren. Weitere Nutzeraktionen, wie eine manuelle Kopplung eines Ladekabels können jedoch entfallen.

## Patentansprüche

1. Elektroroller-Ladestation (100, 200, 300, 400) zum elektrischen Laden von Elektrorollern (252, 452), umfassend:
- mindestens eine in einem Gehäuse (102, 202) der Elektroroller-Ladestation (100, 200, 300, 400) angeordnete Ladeeinrichtung (104), eingerichtet zum Bereitstellen von elektrischer Energie,
- wobei das Gehäuse (102, 202) mindestens einen Eingangsanschluss (106) aufweist, eingerichtet zum Anschließen der Ladeeinrichtung (104) an eine Energiequelle,
- mindestens einen an mindestens einem Ausgangsanschluss (108) des Gehäuses (102, 202) gekoppelten stabförmigen Kabelkanal (110, 210, 310, 410) mit mindestens einer Kabelkanalwand (112, 212.1, 212.2, 212.3, 212.4, 312),
- wobei der stabförmige Kabelkanal (110, 210, 310, 410) mindestens einen innerhalb der mindestens einen Kabelkanalwand (112, 212.1, 212.2, 212.3, 212.4, 312) verlaufenden und elektrisch mit dem Ausgangsanschluss (108) des Gehäuses (102, 202) gekoppelten elektrischen Hauptleiter (116, 316) mit mindestens einem Abgriff (118.1, 118.2, 118.3, 118.4, 118.5) aufweist,
- mindestens ein Lademodul (122, 222, 322, 422),
- wobei der stabförmige Kabelkanal (110, 210, 310, 410) mindestens einen ersten Modulanschluss (120.1, 120.2, 120.3, 120.4, 120.5, 420) aufweist, eingerichtet zum Koppeln mit einem zweiten Modulanschluss (124, 424) des Lademoduls (122, 222, 322, 422),
- wobei das Lademodul (122, 222, 322, 422) mindestens eine elektrische Ladeschnittstelle (126, 326, 426) aufweist, eingerichtet zum Koppeln mit einer zweiten elektrischen Ladeschnittstelle (494) eines Elektrorollers (252, 452),
- wobei in einem Koppelzustand zwischen dem ersten Modulanschluss (120.1, 120.2, 120.3, 120.4, 120.5, 420) und dem zweiten Modulanschluss (124, 424) eine elektrische Verbindung (129) zwischen dem Abgriff (118.1, 118.2, 118.3, 118.4, 118.5) und der elektrischen Ladeschnittstelle (126, 326, 426) zumindest herstellbar ist,
**dadurch gekennzeichnet, dass**
- der erste Modulanschluss (120.1, 120.2, 120.3, 120.4, 120.5, 420) und der zweite Modulanschluss (124) als Steckverbindung ausgebildet sind,
- wobei bei einer hergestellten Steckverbindung eine elektrische und mechanische Kopplung vorliegt, und
- der erste Modulanschluss (120.1, 120.2, 120.3, 120.4, 120.5, 420) und/oder der zweite Modulanschluss (124) mindestens einen Sperrmechanismus umfassen, eingerichtet zum Blockieren einer Entfernung des Lademoduls (122, 222, 322, 422) bei einer hergestellten Steckverbindung in einem Sperrzustand des Sperrmechanismus.

2. Elektroroller-Ladestation (100, 200, 300, 400) nach Anspruch 1, **dadurch gekennzeichnet, dass**
- der stabförmige Kabelkanal (110, 210, 310, 410) ein oberirdisch auf einem Untergrund (251) anordnenbarer Kabelkanal (110, 210, 310, 410) ist, und/oder
- die mindestens eine Kabelkanalwand (112, 212.1, 212.2, 212.3, 212.4, 312) aus einem Metall gebildet ist, insbesondere aus Stahl.

3. Elektroroller-Ladestation (100, 200, 300, 400) nach Anspruch 1 oder 2, **dadurch gekennzeichnet, dass**
- die Ladeeinrichtung (110) zumindest eines der Ladeelemente (128, 130, 132) aus der Gruppe, umfassend:
- elektrischer Zähler (128),
- mindestens ein Kommunikationsmodul (130),
- Netzteil (132),
umfasst.

4. Elektroroller-Ladestation (100, 200, 300, 400) nach einem der vorherigen Ansprüche, **dadurch gekennzeichnet, dass**
- der stabförmige Kabelkanal (110, 210, 310, 410) eine rechteckförmige Querschnittsfläche (360) aufweist, und
- die Höhe (356) des Kabelkanals (110, 210, 310, 410) insbesondere zwischen 5 cm und 50 cm liegt, vorzugsweise zwischen 10 cm und 30 cm.

5. Elektroroller-Ladestation (100, 200, 300, 400) nach einem der vorherigen Ansprüche, **dadurch gekennzeichnet, dass**
- das Lademodul (122, 222, 322, 422) mindestens einen ansteuerbaren Schalter umfasst, eingerichtet zum Herstellen und Trennen der elektrischen Verbindung (129) zwischen dem Abgriff (118.1, 118.2, 118.3, 118.4, 118.5) und der mindestens einen elektrischen Ladeschnittstelle (126, 326, 426).

6. Elektroroller-Ladestation (100, 200, 300, 400) nach einem der vorherigen Ansprüche, **dadurch gekennzeichnet, dass**
- die mindestens eine Ladeschnittstelle (126, 326, 426) ein fest an dem Lademodul (122, 222, 322, 422) angeschlagenes Ladekabel (362) umfasst, und
- das Ladekabel (362) auf einer Kabeltrommel (368) eines Kabelaufrollmechanismus (366) herausziehbar gelagert ist.

7. Elektroroller-Ladestation (100, 200, 300, 400) nach einem der vorherigen Ansprüche, **dadurch gekennzeichnet, dass**
- das Lademodul (122, 222, 322, 422) mindestens eine Aufnahme (480) aufweist, eingerichtet zum zumindest teilweisen Aufnehmens eines Teils eines Elektrorollers (252, 452), derart, dass in einem aufgenommenen Zustand der Elektroroller (252, 452) durch die Aufnahme (480) in einem Parkzustand gehalten wird, und
- die mindestens eine Ladeschnittstelle (126, 326, 426) einen ersten elektrischen Lademodulkontakt (484.1) und mindestens einen weiteren elektrischen Lademodulkontakt (484.2) umfasst,
- wobei der erste elektrische Lademodulkontakt (484.1) eingerichtet ist zum elektrischen Kontaktieren mit einem ersten elektrischen Elektrorollerkontakt (492.1) des Elektrorollers (252, 452) und der weitere elektrische Lademodulkontakt (484.2) eingerichtet ist zum elektrischen Kontaktieren mit einem weiteren Elektrorollerkontakt (494.2) des Elektrorollers (252, 452) in dem Parkzustand.

8. Elektroroller-Ladestation (100, 200, 300, 400) nach Anspruch 7, **dadurch gekennzeichnet, dass**
- die Aufnahme (480) durch die geometrische Ausgestaltung des Lademoduls gebildet wird,
- wobei Schenkel (482.1, 482.2) der Aufnahme derart zueinander angepasst sind, dass sie eine zu einem Vorderrad (490) eines Elektrorollers korrespondieren.

9. Elektroroller-Ladestationssystem (250), umfassend:
- mindestens eine Elektroroller-Ladestation (100, 200, 300, 400) nach einem der vorherigen Ansprüche, und
- mindestens eine zumindest teilweise oberirdisch angeordnete Kabelanschlussstation (254).

10. Elektroroller-Ladestationssystem (250) nach Anspruch 9, **dadurch gekennzeichnet, dass**
- die Kabelanschlussstation (254) eine Ortsnetzstation (254) oder eine Straßenbeleuchtungsvorrichtung oder ein Kabelverteilschrank ist.

11. Verwendung einer Elektroroller-Ladestation (100, 200, 300, 400) nach einem der vorherigen Ansprüche 1 bis 9 zum Laden mindestens eines Elektrorollers (252, 452), insbesondere an einer zumindest teilweise oberirdisch angeordneten Kabelanschlussstation (254).

## Claims

1. Electric scooter charging station (100, 200, 300, 400) for electrically charging electric scooters (252, 452), comprising:
- at least one charging device (104) disposed in a housing (102, 202) of the electric scooter charging station (100, 200, 300, 400) and configured to provide electrical energy,
- wherein the housing (102, 202) comprises at least one input port (106) configured to connect the charging device (104) to an energy source,
- at least one rod-shaped cable channel (110, 210, 310, 410) coupled to at least one output port (108) of the housing (102, 202) and having at least one cable channel wall (112, 212.1, 212.2, 212.3, 212.4, 312),
- wherein the rod-shaped cable channel (110, 210, 310, 410) comprises at least one main electrical conductor (116, 316) extending within the at least one cable channel wall (112, 212.1, 212.2, 212.3, 212.4, 312) and electrically coupled to the output terminal (108) of the housing (102, 202) with at least one tap (118.1, 118.2, 118.3, 118.4, 118.5),
- at least one charging module (122, 222, 322, 422),
- wherein the rod-shaped cable channel (110, 210, 310, 410) comprises at least a first module connector (120.1, 120.2, 120.3, 120.4, 120.5, 420) configured to couple to a second module connector (124, 424) of the charging module (122, 222, 322, 422),
- wherein the charging module (122, 222, 322, 422) comprises at least one electrical charging interface (126, 326, 426) configured to couple to a second electrical charging interface (494) of an electric scooter (252, 452),
- wherein in a coupling state between the first module connection (120.1, 120.2, 120.3, 120.4, 120.5, 420) and the second module connection (124, 424) an electrical connection (129) is at least establishable between the tap (118.1, 118.2, 118.3, 118.4, 118.5) and the electrical charging interface (126, 326, 426), **characterized in that**
- the first module connector (120.1, 120.2, 120.3, 120.4, 120.5, 420) and the second module connector (124) are designed as a plug connection,
- wherein there is electrical and mechanical coupling in an established plug connection, and
- the first module connector (120.1, 120.2, 120.3, 120.4, 120.5, 420) and/or the second module connector (124) comprise at least one locking mechanism configured to block a removal of the charging module (122, 222, 322, 422) when a plug connection is established in a locking state of the locking mechanism.

2. Electric scooter charging station (100, 200, 300, 400) according to claim 1, **characterized in that**
- the rod-shaped cable channel (110, 210, 310, 410) is a cable channel (110, 210, 310, 410) arrangeable above ground on a substrate (251),
and/or
- the at least one cable channel wall (112, 212.1, 212.2, 212.3, 212.4, 312) is formed of a metal, in particular of steel.

3. Electric scooter charging station (100, 200, 300, 400) according to claim 1 or 2, **characterized in that**
- the charging device (110) comprises at least one of the charging elements (128, 130, 132) selected from the group comprising:
- electrical counter (128),
- at least one communication module (130),
- mains adapter (132).

4. Electric scooter charging station (100, 200, 300, 400) according to any one of the preceding claims, **characterized in that**
- the rod-shaped cable channel (110, 210, 310, 410) has a rectangular cross-sectional area (360), and
- the height (356) of the cable channel (110, 210, 310, 410) is in particular between 5 cm and 50 cm, preferably between 10 cm and 30 cm.

5. Electric scooter charging station (100, 200, 300, 400) according to any one of the preceding claims, **characterized in that**
- the charging module (122, 222, 322, 422) comprises at least one controllable switch configured to establish and break the electrical connection (129) between the tap (118.1, 118.2, 118.3, 118.4, 118.5) and the at least one electrical charging interface (126, 326, 426).

6. Electric scooter charging station (100, 200, 300, 400) according to any one of the preceding claims, **characterized in that**
- the at least one charging interface (126, 326, 426) comprises a charging cable (362) fixedly attached to the charging module (122, 222, 322, 422), and
- the charging cable (362) is supported on a cable drum (368) of a cable retraction mechanism (366) in a pull-out manner.

7. Electric scooter charging station (100, 200, 300, 400) according to any one of the preceding claims, **characterized in that**
- the charging module (122, 222, 322, 422) comprises at least one receptacle (480) configured to at least partially receive a portion of an electric scooter (252, 452) such that, in a received state, the electric scooter (252, 452) is maintained in a parking state by the receptacle (480), and
- the at least one charging interface (126, 326, 426) comprises a first electrical charging module contact (484.1) and at least one further electrical charging module contact (484.2),
- wherein the first electric charging module contact (484.1) is configured to electrically contact with a first electrical electric scooter contact (492.1) of the electric scooter (252, 452) and the further electric charging module contact (484.2) is configured to electrically contact with a further electric scooter contact (494.2) of the electric scooter (252, 452) in the parking state.

8. Electric scooter charging station (100, 200, 300, 400) according to claim 7, **characterized in that**
- the receptacle (480) is formed by the geometrical configuration of the charging module,
- wherein legs (482.1, 482.2) of the receptacle are adapted to each other in such a way that they correspond to a front wheel (490) of an electric scooter.

9. Electric scooter charging station system (250), comprising:
- at least one electric scooter charging station (100, 200, 300, 400) according to any one of the preceding claims, and
- at least one cable connection station (254) located at least partially above ground.

10. Electric scooter charging station system (250) according to claim 9, **characterized in that**
- the cable connection station (254) is a local access station (254) or a street lighting fixture or a cable distribution cabinet.

11. Use of an electric scooter charging station (100, 200, 300, 400) according to any of the preceding claims 1 to 9 for charging at least one electric scooter (252, 452), in particular at a cable connection station (254) arranged at least partially above ground.

## Revendications

1. Station de charge de scooter électriques (100, 200, 300, 400) pour charger électriquement des scooters électriques (252, 452), comprenant :
- au moins un dispositif de charge (104) disposé dans un boîtier (102, 202) de la station de charge de scooter électrique (100, 200, 300, 400), configuré pour fournir de l'énergie électrique,
- où le boîtier (102, 202) comprend au moins un raccordement d'entrée (106) configuré pour connecter le dispositif de charge (104) à une source d'énergie,
- au moins un conduit de câbles en forme de tige (110, 210, 310, 410) couplé à au moins un raccordement de sortie (108) du boîtier (102, 202), avec au moins une paroi de conduit de câbles (112, 212.1, 212.2, 212.3, 212.4, 312),
- où le conduit de câbles en forme de tige (110, 210, 310, 410) a au moins un conducteur électrique principal (116, 316) s'étendant à l'intérieur de la au moins une paroi de conduit de câbles (112, 212.1, 212.2, 212.3, 212.4, 312) et couplé électriquement au raccordement de sortie (108) du boîtier (102, 202) avec au moins une prise (118.1, 118.2, 118.3, 118.4, 118.5),
- au moins un module de charge (122, 222, 322, 422),
- où le conduit de câbles en forme de tige (110, 210, 310, 410) comprend au moins un premier raccordement de module (120.1, 120.2, 120.3, 120.4, 120.5, 420) adapté pour être couplé à un deuxième raccordement de module (124, 424) du module de charge (122, 222, 322, 422),
- où le module de charge (122, 222, 322, 422) a au moins une interface de charge électrique (126, 326, 426), configuré pour être couplée à une deuxième interface de charge électrique (494) d'un scooter électrique (252, 452),
- où dans un état de couplage entre le premier raccordement de module (120.1, 120.2, 120.3, 120.4, 120.5, 420) et le deuxième raccordement de module (124, 424), une liaison électrique (129) au moins est établissable entre la prise (118.1, 118.2, 118.3, 118.4, 118.5) et l'interface de charge électrique (126, 326, 426), **caractérisé en ce que**
- le premier raccordement de module (120.1, 120.2, 120.3, 120.4, 120.5, 420) et le deuxième raccordement de module (124) sont réalisés sous forme de connexion enfichable,
- où une connexion enfichable établie comprend un couplage électrique et mécanique, et
- le premier connecteur de module (120.1, 120.2, 120.3, 120.4, 120.5, 420) et/ou le deuxième connecteur de module (124) comprennent au moins un mécanisme de blocage configuré pour bloquer un retrait du module de charge (122, 222, 322, 422) lors d'une connexion enfichable établie dans un état de blocage du mécanisme de blocage.

2. Station de recharge de scooter électrique (100, 200, 300, 400) selon la revendication 1, **caractérisée en ce que**
- le conduit de câbles en forme de tige (110, 210, 310, 410) est un conduit de câbles (110, 210, 310, 410) disposable en surface sur un support (251),
et/ou
- l'au moins une paroi de conduit de câbles (112, 212.1, 212.2, 212.3, 212.4, 312) est formée d'un métal, en particulier d'acier.

3. Station de recharge de scooter électrique (100, 200, 300, 400) selon la revendication 1 ou 2, **caractérisée en ce que**
- le dispositif de charge (110) comprend au moins l'un des éléments de charge (128, 130, 132) du groupe comprenant :
- un compteur électrique (128),
- au moins un module de communication (130),
- un bloc d'alimentation (132).

4. Station de recharge de scooter électrique (100, 200, 300, 400) selon l'une des revendications précédentes, **caractérisée en ce que**
- le conduit de câbles en forme de tige (110, 210, 310, 410) a une surface de section transversale rectangulaire (360), et
- la hauteur (356) du conduit de câbles (110, 210, 310, 410) est en particulier comprise entre 5 cm et 50 cm, de préférence entre 10 cm et 30 cm.

5. Station de recharge de scooter électrique (100, 200, 300, 400) selon l'une des revendications précédentes, **caractérisée en ce que**
- le module de charge (122, 222, 322, 422) comprend au moins un commutateur commandable, configuré pour établir et couper la liaison électrique (129) entre le raccordement (118.1, 118.2, 118.3, 118.4, 118.5) et l'au moins une interface de charge électrique (126, 326, 426).

6. Station de recharge de scooter électrique (100, 200, 300, 400) selon l'une des revendications précédentes, **caractérisée en ce que**
- l'au moins une interface de charge (126, 326, 426) comprend un câble de charge (362) attaché de manière fixe au module de charge (122, 222, 322, 422), et
- le câble de charge (362) est supporté de manière extractible sur un tambour de câble (368) d'un mécanisme d'enroulement de câble (366).

7. Station de recharge de scooter électrique (100, 200, 300, 400) selon l'une des revendications précédentes, **caractérisée en ce que**
- le module de chargement (122, 222, 322, 422) comprend au moins un réceptacle (480) configuré pour recevoir au moins partiellement une partie d'un scooter électrique (252, 452) de telle sorte que, dans un état reçu, le scooter électrique (252, 452) est maintenu par le réceptacle (480) dans un état de stationnement, et
- l' au moins une interface de charge (126, 326, 426) comprend un premier contact électrique de module de charge (484.1) et au moins un autre contact électrique de module de charge (484.2),
- où le premier contact électrique de module de charge (484.1) est configuré pour entrer en contact électrique avec un premier contact électrique de scooter électrique (492.1) du scooter électrique (252, 452) et l'autre contact électrique de module de charge (484.2) est configuré pour entrer en contact électrique avec un autre contact de scooter électrique (494.2) du scooter électrique (252, 452) dans l'état de stationnement.

8. Station de recharge de scooter électrique (100, 200, 300, 400) selon la revendication 7, **caractérisée en ce que**
- le réceptacle (480) est formé par le design géométrique du module de chargement,
- où des branches (482.1, 482.2) du réceptacle sont adaptées l'une à l'autre de telle sorte qu'elles correspondent à une roue avant (490) d'un scooter électrique.

9. Système de station de recharge pour scooter électrique (250), comprenant
- au moins une station de recharge de scooter électrique (100, 200, 300, 400) selon l'une des revendications précédentes, et
- au moins une station de raccordement de câbles (254) disposée au moins partiellement au-dessus du sol.

10. Système de station de recharge de scooter électrique (250) selon la revendication 9, **caractérisé en ce que**
- la station de raccordement de câbles (254) est une station de réseau local (254) ou un dispositif d'éclairage public ou une armoire de distribution de câbles.

11. Utilisation d'une station de recharge de scooter électrique (100, 200, 300, 400) selon l'une des revendications précédentes 1 à 9 pour recharger au moins un scooter électrique (252, 452), en particulier à une station de raccordement de câbles (254) disposée au moins partiellement au-dessus du sol.
